# EUROPÄISCHE PATENTANMELDUNG

(11) **EP 1 189 130 A1**
(43) Veröffentlichungstag der Anmeldung: **20.03.2002**
(21) Anmeldenummer: 01121022.6
(22) Anmeldetag: 31.08.2001
(51) Int. Cl.: G06F 3/02, H01H 13/70

(54) **Tastatur für Computer**

(30) Priorität: 11.09.2000 DE 10045005; 24.10.2000 DE 10052677
(71) Anmelder: Witteborg, Günter, 17310 Lloret der Mar (ES)
(72) Erfinder: Witteborg, Günter, 17310 Lloret der Mar (ES)
(74) Vertreter: Winter, Brandl, Fürniss, Hübner, Röss, Kaiser, Polte Partnerschaft

(57) **Zusammenfassung**

Beschrieben wird eine Tastatur für Computer, die sich dadurch auszeichnet, daß zumindest das Tastenfeld beleuchtbar ist oder einen Leuchteffekt hat.

## Beschreibung

Die Erfindung betrifft eine Tastatur für Computer.

Derartige Tastaturen sind in verschiedensten Ausführungen bekannt, wie z.B. als Tastaturen, die in einen Laptop eingebaut oder über eine Schnittstelle mit dem Computer koppelbar sind, wobei unterschiedlichste Arten der Signalübertragung, wie z.B. eine Datenübertragung auf Infrarotbasis Anwendung finden.

Allen bislang auf dem Markt befindlichen Tastaturen, insbesondere nachrüstbare Tastaturen, die als Computerzubehör gehandelt werden, ist gemeinsam, daß sie nur bei ausreichender Beleuchtung der Umgebung sicher und exakt bedient werden können.

Der Erfindung liegt die Aufgabe zugrunde, eine Tastatur der eingangs beschriebenen Art zu schaffen, die sich dadurch auszeichnet, daß sie unabhängig vom Beleuchtungszustand der Umgebung sicher zu bedienen ist.

Diese Aufgabe wird durch die Merkmale des Patentanspruchs 1 gelöst.

Erfindungsgemäß ist die Tastatur zumindest im Bereich des Tastenfeldes beleuchtet oder mit einem Leuchteffekt versehen, wobei gemäß einer bevorzugten Ausführungsform der Erfindung jede Taste beleuchtet ist.

Die Tastatur kann in den Computer, wie z.B. einem Laptop fest eingebaut sein und eine Beleuchtung des Tastenfelds nach der Art eines Mobiltelefons haben. Die Erfindung eignet sich allerdings auch in besonderer Weise für Tastaturen, die über ein Kabel oder eine anderweitige Schnittstelle an einen Computer anschließbar sind. Durch die Beleuchtung kann die Tastatur selbst im Dunklen sicher und zuverlässig bedient werden.

Der Leuchteffekt kann auf verschiedene Art und Weise erzielt werden, beispielsweise elektrisch oder elektrochemisch, wie z.B. durch eine Beschichtung der Tasten mit einem fluoreszierenden Farbstoff.

Wenn die Tastatur elektrisch beleuchtet wird, ist es von Vorteil, wenn in die Tastatur eine Spannungsquelle integriert ist.

Die elektrische Beleuchtung der Tasten beziehungsweise der Tastengruppen kann auf verschiedene Art und Weise, insbesondere unter Heranziehung gängiger Tastaturbeleuchtungssystemen erfolgen. Eine besonders einfache und effektive sowie platzsparende Art und Weise der Tastaturbeleuchtung ist Gegenstand der Ansprüche 6 bis 8. Die Lichtleiteinrichtung, die beispielsweise in Form zumindest einer Lichtleiterplatte ausgebildet sein kann, kann neben der Funktion der Lichtleitung zusätzlich die Aufgabe übernehmen, die Tasten beziehungsweise die Tastengruppen zu tragen und der Tastatur Stabilität zu verleihen.

Für die gesamte Tastatur kann auch eine einzige, als Trägerplatte fungierende Lichtleiterplatte Verwendet werden, was Gegenstand des Anspruchs 7 ist. Wenn allerdings mehrere derartige Lichtleiterplatten für unterschiedliche Tastengruppen vorgesehen sind, besteht die Möglichkeit, unterschiedliche Tastengruppen unterschiedlich zu beleuchten und damit besonders zu kennzeichnen.

Eine alternative Ausgestaltung der Lichtleitleiteinrichtung ist Gegenstand des Anspruchs 8. Gemäß dieser Weiterbildung ist es möglich, für einzelne Tasten oder Tastengruppen Individualbeleuchtungen bereitzustellen, und zwar mit möglichst geringem Lichtverlust.

Nachstehend werden anhand schematischer Zeichnungen Ausführungsbeispiele der Erfindung näher erläutert. Es zeigen:
Figur 1 eine Draufsicht auf eine als Computerzubehör ausgestaltete Tastatur;
Figur 2 in vergrößerter Darstellung eine Taste der Tastatur gemäß Figur 1 entsprechend einer ersten Ausführungsform zur Bereitstellung des Leuchteffekts;
Figur 3 eine der Figur 2 entsprechende Darstellung einer anderen Variante einer Taste der Tastatur;
Figur 4 eine den Figuren 2 und 3 entsprechende Darstellung einer weiteren Ausführungsform;
Figur 5 eine der Figur 1 ähnliche Ansicht einer weiteren Ausführungsform der Erfindung;
Figur 6 einen Schnitt durch den Randbereich einer Variante der erfindungsgemäßen Tastatur, die zur Beleuchtung einzelner Tasten eine Lichtleiterplatte verwendet;
Figur 7 eine der Figur 6 entsprechende Teil/Schnittansicht einer Variante der Ausführungsform nach Figur 6; und
Figur 8 den Ausschnitt eines Schnitts durch eine weitere Ausführungsform der Tastatur im Bereich einer Taste die gemäß einer weiteren Variation der Lichtleiteinrichtung.

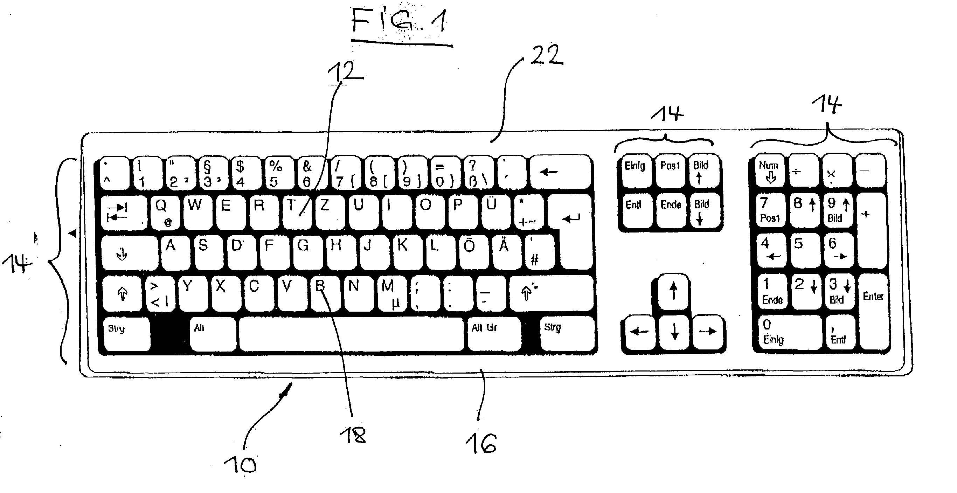

In Figur 1 ist mit dem Bezugszeichen 10 eine Computer-Tastatur bezeichnet, die ein beispielsweise in 4 Gruppen gegliedertes Tastenfeld 14 trägt, deren lasten 12 in einem Einbettungsteil 22 - im gezeigten Ausführungsbeispiel in Form einer Konsole 16 - aufgenommen, d.h. zur Bedienung gelagert sind.

Das die Tasten einbettende Teil 22 ist bei der Ausführungsform nach Figur 1 als herkömmliche Konsole gestaltet, die beispielsweise aus lichtundurchlässigem Kunststoff besteht.

Damit die Tastatur unabhängig von den Lichtverhältnissen der Umgebung sicher und zuverlässig bedient werden kann, ist die Tastatur so ausgebildet, daß zumindest das Tastenfeld 14 beleuchtet ist oder einen Leuchteffekt hat.

Das Tastenfeld 14 ist beispielsweise - ähnlich wie bei auf dem Mark befindlichen Mobil-Telefonen - beleuchtet, was auf unterschiedlichste Art und Weise geschehen kann:

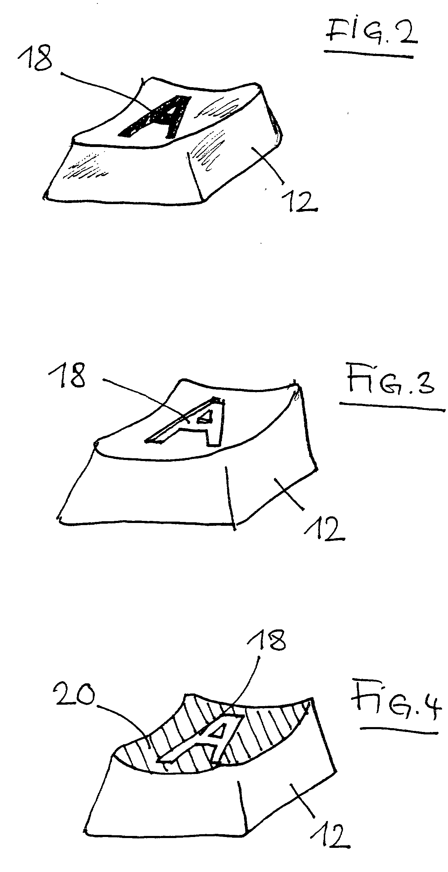

Eine - in Fig. 2 angedeutete - Variante besteht darin, daß die Tasten 12, die in der Regel abnehmbar an der Konsole 16 befestigt sind, transparent gestaltet sind und auf ihrer Oberseite eingravierte oder aufgedruckte Symbole 18 tragen. Auf der Unterseite der Tasten 12 befindet sich eine Leuchteinrichtung, die für eine gleichmäßige Beleuchtung des Hintergrunds der Tasten sorgt. Es ist auch möglich, die Tasten einzeln zu beleuchten.

Vorzugsweise ist die Beleuchtung ein- und ausschaltbar.

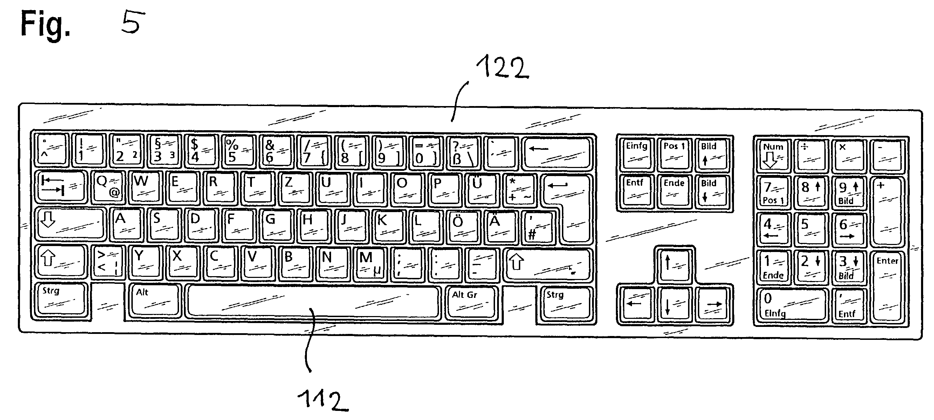

Gemäß einer weiteren Variante - entsprechend Fig. 3 - können die Tasten 12 lichtundurchlassig gestaltet sein, wobei die Transparenz nur im Bereich des jeweils angebrachten Zeichensymbols 18 gegeben ist.

Schließlich ist es auch möglich, die Beleuchtung der Tastatur bzw. des Tastenfeldes 14 durch eine gesonderte Lichtquelle auf der Oberseite der Konsole 14 vorzunehmen.

Alternativ hierzu ist der Leuchteffekt - gemäß Fig. 4 - des Tastenfeldes 14 auch dadurch möglich, daß entweder die Oberseiten der Tasten 12 oder die jeweiligen Tastensymbole 18 mit einer selbstleuchtenden Schicht 20, beispielsweise auf der Basis eines fluoreszierenden Farbstoffs versehen sind. Der Farbstoff wird so gewählt, das sich unter vorbestimmten Umgebungs-Lichtverhältnissen - wie z.B. bei beginnender Dunkelheit - ein Effekt einstellt, der es erlaubt, den Zeichensatz leichter zu erkennen und zu bedienen.

Den Tasten 12 können zumindest gruppenweise Individual-Beleuchtungselemente zugeordnet sein.

Eine weitere Ausführungsform ist in der Figur 5 gezeigt. Im Unterschied zur Variante nach den vorstehenden Figuren sind hier nicht nur die Tasten 112, die ansonsten wie bei der Ausführungsform nach Figur 2 mit lichtundurchlässigen Symbolen versehen sind, sondern auch der die Tasten einbettende Teil 122 transparent ausgebildet. Die Tastatur, die in ein Computergehäuse integriert sein kann, ist von der Unterseite beleuchtbar, so dass sich der die Bedienung verbessernde Leuchteffekt einstellt.

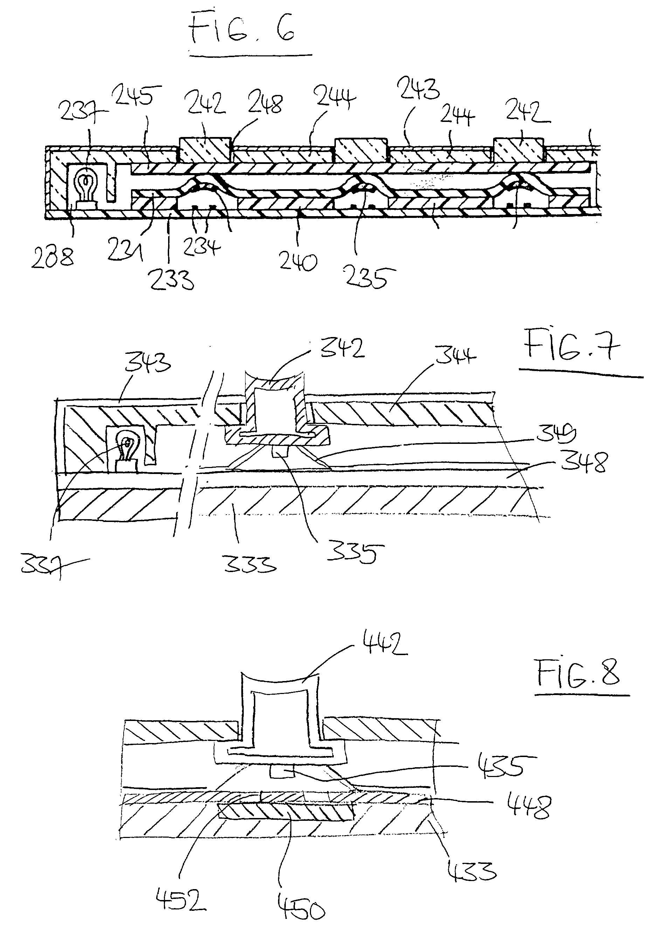

Unter Bezug auf die Figuren 6 bis 8 werden im Folgenden Ausführungsbeispiele der Tastatur gezeigt, bei denen die Beleuchtung der Tasten beziehungsweise der Tastengruppen über eine Lichtleitereinrichtung erfolgt. Die Tastatur wird im Wesentlichen durch zwei Bauelemente stabilisiert, nämlich durch eine Basisplatte 233 und eine Tastaturabdeckung 244, die als Lichtleiter ausgebildet ist. Die Lichtleiterplatte 244 ist als separates Bauteil ausgebildet. Die Tasten sind mit dem Bezugszeichen 242. Der Tastenkontakt erfolgt über ortsfeste Schaltstücke 234 und bewegliche Schaltstücke 235, die an der Unterseite von Vorwölbungen in einer Abdeckfolie 231 angeordnet sind. Mit dem Bezugszeichen 240 sind Abstandshalter bezeichnet. Die gewölbten Bereiche der Abdeckfolie 231 werden nicht direkt über die Tasten 242 niedergedrückt. Die Tasten 242 sind mit einer elastischen Folie 245 verbunden, die beim Niederdrücken der Taste 242 elastisch verformt wird und über die domartigen Vorsprünge der Folie 231 die beweglichen Schaltstücke 235 nach unten drückt.

Der Lichtleiter 244 besteht aus optisch durchlässigem Wertstoff, der von einer Gehäuseabdeckung 243 abgedeckt ist. Auch die Tasten 242 bestehen aus optisch durchlässigem Werkstoff. Die Tasten 242 durchragen Durchbrüche 248 in der Lichtleiterplatte 244, und zwar derart, dass die Taste 242 vorzugsweise in dirkter Berührung mit der Lichtleiterplatte 244 axial in dem Durchbruch 248 nach oben und nach unten verschiebbar ist.

Abseits der Tasten 242 ist zwischen der Bodenplatte 233 und der Lichtleiterplatte 244 eine Lampe 237 angeordnet, und zwar in einem Raum 238. Der Ort der Lampe 237 ist dabei so gewählt, dass das von der Lampe 237 ausgestrahlte Licht nicht direkt vom oberhalb der Tastatur her durch die durchsichtigen oder durchscheinenden Tasten 242 sichtbar ist. Dadurch können Blendeffekte beim Benutzer ausgeschlossen werden.

Die Lampe 237 kann von einer beliebigen Lichtquelle gebildet sein. Sie kann als Miniaturglühlampe oder als Leuchtdiode ausgebildet sein. Dabei muss sie lediglich ausreichend Licht erzeugen, um alle, der Lichtleiterplatte 244 zugeordnete Tasten 242 ausreichend ausleuchten. Das Licht wird durch die Lichtleiterplatte 244 hindurchgeleitet und erreicht auf diesem Weg die einzelnen Tasten 242, wobei dann die beispielsweise auf diesen Tasten angebrachten Tastensymbole zum Leuchten gebracht werden.

Prinzipiell kann die Lichtleiterplatte aus verschiedenem Werkstoff bestehen. Allerdings sollte der Werkstoff optisch so durchlässig wie möglich gewählt werden, um auch noch eine von der Lampe 237 weit entfernte Taste 242 ausreichend auszuleuchten. Vorzugsweise weist der optisch durchlässige Werkstoff der Lichtleiterplatte 244 einen Brechungsindex auf, der vorzugsweise so groß wie möglich sein sollte.

Vorzugsweise wird die Oberseite der Tasten 242 aufgerauht oder mattiert, sodass das von den Tasten abgestrahlte Licht irregulär und breit gestreut wird.

Die Gehäuseabdeckung 243 besteht vorzugsweise aus einem undurchsichtigen Werkstoff, sodass sich das Feld der beleuchteten Tasten 242 besser gegen den dunklen Untergrund der Gehäuseabdeckung abhebt.

Es ist vorteilhaft, als Werkstoff für die Lichtleiterplatte 244 einen optisch besonders leistungsfähigen Werkstoff heranzuziehen. Der Brechungsindex sollte dabei so groß wie möglich gewählt werden, um Streuverluste durch die Oberfläche der Lichtleiterplatte 244 so klein wie möglich zu halten.

Eine Variante der Ausgestaltung der Tastatur unter Zuhilfenahme einer Lichtleitereinrichtung ist in Figur 7 gezeigt. Hier ist die Taste 342 auf der Unterseite mit einem Kontakt 335 versehen, der mit einem nicht näher dargestellten Gegenkontakt auf einer Kontaktplatine 348 zusammenwirkt. Die Beleuchtung der Taste 342 erfolgt wiederum über eine Lichtleiterplatte 344, die im Bereich außerhalb der Tasten 342 durch eine lichtdurchlässige Abdeckung 343 abgeschirmt ist. Die Basisplatte ist mit dem Bezugszeichen 333 und die Beleuchtungslampe mit dem Bezugszeichen 337 bezeichnet. Mit dem Bezugszeichen 349 ist eine elastische Folie angedeutet, mit der die Rückstellkraft auf die Taste 342 aufgebracht werden kann.

Auch bei dieser Ausführungsform wird über die lichtleitende Funktion der Lichtleiterplatte 344 die transparent ausgebildete Taste 342 durch eine zentrale Beleuchtungseinrichtung 337 beleuchtet.

Bei den zuvor beschriebenen Ausführungsbeispielen erfolgt die Beleuchtung mehrerer Tasten, beispielsweise von Tasten, die zu einer Tastengruppe zusammengefasst sind, durch eine gesonderte Lichtleiterplatte. Bei der Variante gemäß Figur 8 ist die Anordnung so getroffen, dass einzelne Tasten durch gesonderte Lichtleiterelemente beleuchtet werden. Die wiederum transparent ausgebildete Taste 442 wirkt über ihren Kontakt 435 mit einem Gegenkontakt auf einer Kontaktplatte 448 zusammen, die auf einer Basisplatte 433 aufliegt. In der Basisplatte 433 ist eine Ausnehmung für einen Leuchtkorper 450 vorgesehen, der über einen nicht näher gezeigten flexiblen Lichtleiter an eine entsprechende Lichtquelle, wie zum Beispiel eine gewöhnliche Lampe oder eine Leuchtdiode angeschlossen ist. Oberhalb des Leuchtkörpers 450 sind in der Kontaktplatte 448 Durchbrüche 452 ausgebildet, sodass eine Beleuchtung der Taste 442 von unten erfolgen kann.

Abweichend von der Darstellung nach Figur 8 ist es selbstverständlich auch möglich, den Leuchtkörper 450 selbst als Lichtleiter auszubilden, der dann entweder einer individuellen Tasten 442 oder einer Tastengruppe zugeordnet wird. So könnte beispielsweise mit der Ausgestaltung nach Figur 8 über das Element 450 die Beleuchtung einer gesamten Tastenreihe vorgenommen werden. Durch die eigentliche Zusammenfassung der Tastengruppen, die durch einen einzelnen Lichtleiter beleuchtet werden, lässt sich die Anzahl der Beleuchtungselemente und/ oder der Lichtleiter auf ein vernünftiges Maß reduzieren. Außerdem besteht die Möglichkeit, unterschiedliche Tastengruppen durch unterschiedliche Beleuchtung zu kennzeichnen.

Selbstverständlich sind Abweichungen von den zuvor beschriebenen Ausführungsbeispielen möglich, ohne den Grundgedanken der Erfindung zu verlassen. Es können beliebige andere Formen der Tastatur verwendet werden. Auch ist der Leuchteffekt auf andere Art und Weise erzielbar, wie z.B. durch eine komplementäre Gestaltung der Taste nach Figur 4, d.h. durch Beschichtung der Tasten-Oberseite mit leuchtfähiger Schicht unter Aussparung des Zeichens.

Die Erfindung schafft somit eine Tastatur für Computer, die sich dadurch auszeichnet, daß zumindest das Tastenfeld beleuchtbar ist oder einen Leuchteffekt hat.

## Patentansprüche

1. Tastatur für Computer, **dadurch gekennzeichnet, daß** zumindest das Tastenfeld (14) beleuchtbar ist oder einen Leuchteffekt hat.

2. Tastatur nach Anspruch 1, **dadurch gekennzeichnet, daß** an der Tastatur eine gesonderte Beleuchtungseinrichtung vorgesehen ist.

3. Tastatur nach Anspruch 2, **dadurch gekennzeichnet, daß** zumindest die Tasten (12;112) der Tastatur wenigstens bereichsweise lichtdurchlässig ausgebildet sind und die Beleuchtungseinrichtung die Tastatur von der Unterseite der Tasten (12;112) beleuchtet.

4. Tastatur nach einem der Ansprüche 1 bis 3, **dadurch gekennzeichnet, daß** den Tasten (12;112) zumindest gruppenweise Individual-Beleuchtungselemente zugeordnet sind.

5. Tastatur nach Anspruch 1, **dadurch gekennzeichnet, daß** die Tasten (12) zumindest bereichsweise mit einem selbstleuchten, beispielsweise fluoreszierenden Farbstoff versehen sind.

6. Tastatur nach einem der Ansprüche 1 bis 5, **dadurch gekennzeichnet, dass** die Beleuchtung der Tasten (242; 342; 442) über eine Lichtleitereinrichtung (244; 344; 450) erfolgt.

7. Tastatur nach Anspruch 6, mit zumindest einer, mindestens eine Taste (242; 342; 442) tragenden Trägerplatte, **dadurch gekennzeichnet, dass** die Trägerplatte (244; 344) als Lichtleiter ausgebildet ist, der eine Lichtquelle (237; 337) zugeordnet ist.

8. Tastatur nach Anspruch 6 oder 7, **dadurch gekennzeichnet, dass** die Lichtleitereinrichtung eine Vielzahl von Lichtleitern (450) aufweist, die ausgehend von einer Lichtquelle zu unterschiedlichen Tasten oder Tastengruppen geführt sind.

9. Tastatur nach einem der Ansprüche 6 bis 8, **dadurch gekennzeichnet, dass** als Lichtquelle für die Lichtleitereinrichtung ein Miniaturglühlampe oder eine Leuchtdiode Anwendung findet.
